(19) Europäisches Patentamt
European Patent Office
Office européen des brevets

(11) EP 3 076 533 A1

(12) EUROPEAN PATENT APPLICATION
published in accordance with Art. 153(4) EPC

(43) Date of publication:
05.10.2016 Bulletin 2016/40

(51) Int Cl.:
*H02K 41/03* (2006.01)

(21) Application number: 14885205.6

(22) Date of filing: 23.10.2014

(86) International application number:
PCT/JP2014/078262

(87) International publication number:
WO 2015/136759 (17.09.2015 Gazette 2015/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 12.03.2014 JP 2014049296

(71) Applicants:
• National Institute of Technology
Hachioji-shi, Tokyo 193-0834 (JP)
• KYB Corporation
Tokyo 105-6111 (JP)

(72) Inventors:
• KANO, Yoshiaki
Toyota-shi
Aichi 471-8525 (JP)
• SATO, Kousuke
Tokyo 105-6111 (JP)
• TAKAHASHI, Noriyuki
Tokyo 105-6111 (JP)

(74) Representative: Grünecker Patent- und
Rechtsanwälte
PartG mbB
Leopoldstraße 4
80802 München (DE)

(54) LINEAR MOTOR

(57) A linear motor includes: an annular yoke; a rod that penetrates the yoke in a yoke axis direction; a plurality of teeth disposed at equal intervals in the yoke axis direction so as to project from an inner peripheral surface of the yoke; slots respectively formed between adjacent teeth of the plurality of teeth, a plurality of coils respectively disposed in the slots, and permanent magnets arranged and held in the rod in the yoke axis direction. The yoke is configured so that the slots are disposed repeatedly by a reference number determined in accordance with the number of phases of an alternating current passed through the coils, and a width adjusting unit configured to adjust a tooth width is provided in an Nth tooth from a yoke end, the Nth tooth being determined by Equation (1).

FIG. 2

**Description**

TECHNICAL FIELD

The present invention relates to a linear motor.

BACKGROUND ART

JP2012-244688A discloses a linear vernier motor that displaces a tubular yoke and a rod relative to each other in an axial direction by attracting a permanent magnet disposed on an outer peripheral surface of the rod using a moving magnetic field generated around a coil disposed on an inner peripheral surface of the yoke.

SUMMARY OF INVENTION

It is known that in such a linear vernier motor, a detent force (a magnetic attraction force) is generated between the permanent magnet disposed on the rod and teeth formed in the yoke. A magnitude of the detent force varies periodically in accordance with relative positions of the rod and the yoke in the axial direction.
A linear vernier motor illustrated in FIG. 4A of JP2012-244688A is configured so that a current passed through the coil is a three-phase alternating current, and the yoke is a twelve-slot yoke in which two sets of the reference number (six) of slots are disposed in succession. A plurality of teeth formed in the yoke is disposed at equal intervals in a yoke axis direction so that a slot width becomes constant.
In the linear vernier motor described in JP2012-244688A, a variation cycle of a detent force generated in a left side region that includes the reference number of slots positioned in a left half of the yoke has the same phase as a variation cycle of a detent force generated in a right side region that includes the reference number of slots positioned in a right half of the yoke each other. For this reason, a sum of the detent forces generated by the linear vernier motor thus increases. As a result, controllability of the linear vernier motor deteriorates.
It is an object of the present invention to provide a linear motor in which a detent force can be reduced.
According to an aspect of the present invention, there is provided a linear motor includes an annular yoke, a rod that penetrates the yoke in a yoke axis direction, a plurality of teeth disposed at equal intervals in the yoke axis direction so as to project from an inner peripheral surface of the yoke, slots respectively formed between adjacent teeth of the plurality of teeth, a plurality of coils respectively disposed in the slots, and permanent magnets arranged and held in the rod in the yoke axis direction. The yoke is configured so that the slots are disposed repeatedly by a reference number determined in accordance with the number of phases of an alternating current that is passed through the coils, and a width adjusting unit configured to adjust a tooth width is provided in an Nth tooth from a yoke end, the Nth tooth being determined by Equation (1).

BRIEF DESCRIPTION OF DRAWINGS

FIG. 1 is a schematic view showing a configuration of an actuation system including a linear motor according to an embodiment of the present invention.
FIG. 2 is a sectional view showing a part of the linear motor.
FIG. 3 is a view showing an equivalent electric circuit of the linear motor.
FIG. 4 is a view for explaining a detent force generated between permanent magnets of a rod and teeth of a yoke.

DESCRIPTION OF EMBODIMENTS

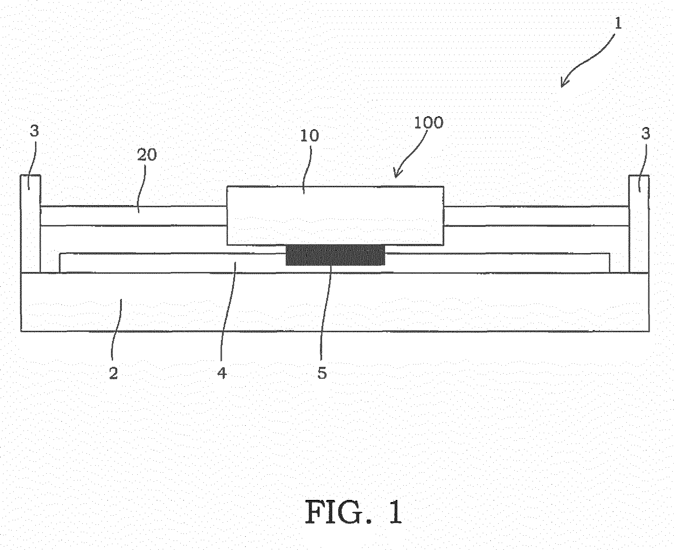

Hereinafter, an embodiment of the present invention will be described with reference to the accompanying figures.
Referring to FIG. 1, an actuation system 1 including a linear motor 100 according to the present embodiment will be described.
The actuation system 1 includes: the linear motor 100, which includes a tubular yoke 10 and a rod 20; a mounting portion 2 on which the linear motor 100 is mounted; support portions 3 each standing on the mounting portion 2 to support respective ends of the rod 20, a rail 4 disposed on the mounting portion 2; and a carrier 5 that moves along the rail 4 while the yoke 10 is fixed thereto. When the linear motor 100 is driven, the yoke 10 moves along the rail 4 together with the carrier 5. In the actuation system 1, a driving subject such as a component is mounted on the yoke 10 so that the driving subject can be moved in a straight line.

It should be noted that although the actuation system 1 is configured as a driving actuation system for driving a driving subject, the actuation system 1 is not limited to this configuration. By attaching the yoke 10 of the linear motor 100 to one of two members that are displaced relative to each other and attaching the rod 20 of the linear motor 100 to the other member, the actuation system 1 may be configured as a damping actuation system that suppresses relative displacement between the two members.

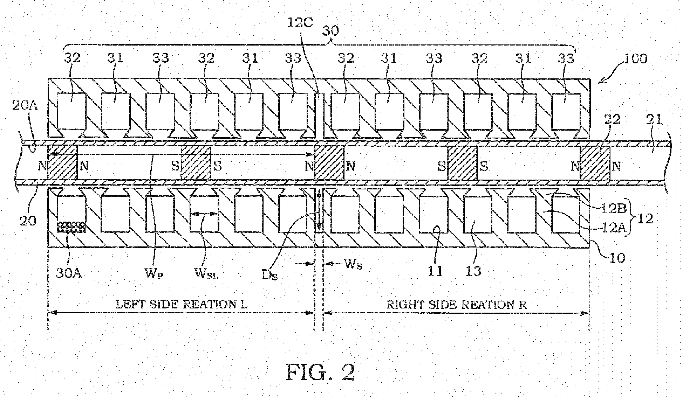

Next, a configuration of the linear motor 100 that serves as a drive source of the actuation system 1 will be described with reference to FIG. 2.

The linear motor 100 includes the yoke 10 that is formed as a tubular body, the rod 20 that penetrates an interior of the yoke 10 in a yoke axis direction, a plurality of coils 30 provided in the yoke 10, and a plurality of permanent magnets 21 held in the rod 20. In the linear motor 100, thrust for displacing the yoke 10 and the rod 20 relative to each other in an axial direction is generated by attracting the permanent magnets 21 held in the rod 20 using a moving magnetic field that is generated around the coils 30 when an alternating current is passed through the coils 30.

The yoke 10 is a cylindrical member formed from a magnetic material (soft iron, for example). Teeth 12 are formed in the yoke 10 so as to project toward a yoke center from an inner peripheral surface 11.

Each of the teeth 12 includes an upright portion 12A that stands upright from the inner peripheral surface 11 and extends in an inner peripheral direction of the yoke 10, and a tip end portion 12B provided on a tip end of the upright portion 12A. An end surface of the tip end portion 12B of the tooth 12 is configured to oppose an outer peripheral surface of the rod 20. A width (a thickness in the yoke axis direction) of the tip end portion 12B is set to be larger than a width (a thickness in the yoke axis direction) of the upright portion 12A. Further, the width of the tip end portion 12B is formed so as to increase gradually toward the yoke center.

It should be noted that the widths of the upright portions 12A and tip end portions 12B of the teeth 12 respectively positioned on both ends of the yoke 10 are set to be halves of the widths of the upright portion 12A and tip end portion 12B of each of the other teeth 12.

Thirteen teeth 12 configured as described above are arranged in the yoke 10 along the axial direction. A space between adjacent teeth 12, 12 serves as a slot 13. These teeth 12 are disposed at equal intervals so that a width $W_{SL}$ of the respective slots 13 becomes constant.

The slots 13 are annular grooves in which the coils 30 are respectively disposed. In the linear motor 100, thirteen teeth 12 are provided, and the number of the slots 13 is thus twelve.

In a linear motor, the number of slots formed in the yoke is generally determined in accordance with the number of phases of the alternating current passed through the coils. In a case where an alternating current passed through the coils is a three-phase alternating current, a reference number of the yoke is six, and $6n_1$ (where $n_1$ is a positive integer) slots are thus provided in the yoke. In the linear motor 100 according to the present embodiment, twelve slots 13, i.e. twice the reference number, are formed in the yoke 10. Hence, the yoke 10 is configured as a twelve-slot yoke in which two sets of the reference number (six) of slots are disposed in succession, or in other words the number of formed slots is twice the reference number.

One coil 30 is disposed in the interior of each of the slots 13. The number of coils 30 corresponds to the total number of slots 13, i.e. twelve, and the twelve coils 30 are constituted by four U-phase coils 31, four V-phase coils 32, and four W-phase coils 33. A U-phase current of the three-phase alternating current is passed through the U-phase coils 31. A V-phase current of the three-phase alternating current is passed through the V-phase coils 32. A W-phase current of the three-phase alternating current is passed through the W-phase coils 33.

The U-phase coils 31, the V-phase coils 32, and the W-phase coils 33 are formed in a ring shape by winding an insulation-coated winding 30A around the rod 20. It should be noted that FIG. 2 shows only a part of the winding 30A of the V-phase coil 32 and all other parts are omitted.

Further, the U-phase coils 31, the V-phase coils 32, and the W-phase coils 33 are disposed alternately, one phase by one phase, in order of the V-phase, the U-phase, and the W-phase from the slot 13 at a left end side toward the slot 13 at a right end side.

The rod 20 disposed coaxially with the yoke 10 is a cylindrical member formed from a non-magnetic material (stainless steel, for example). The rod 20 includes a through hole 20A that penetrates the rod 20 in the axial direction. As shown in FIG. 1, both ends of the rod 20 are respectively fixed to the support portions 3 provided on the mounting portion 2.

As shown in FIG. 2, the plurality of permanent magnets 21 is held in the through hole 20A of the rod 20 and respectively arranged in the axial direction so as to oppose the tip end portions 12B of the teeth 12. The permanent magnets 21 are formed in a columnar shape and magnetized so that an N pole and an S pole occur in the axial direction. The permanent magnets 21 are provided at equal intervals, and two adjacent permanent magnets 21 are disposed so that identical poles face to each other. Further, columnar yokes 22 formed from a magnetic material (soft iron or the like) are provided between adjacent permanent magnets 21.

In a linear motor, reference numbers in relation to the permanent magnets and the columnar yokes are generally determined in accordance with the reference number relating to the slots. In a case where the reference number relating to the slots 13 is six, as in the linear motor 100, each of the reference numbers relating to the permanent magnets 21 and the columnar yokes 22 is set to $2n_2$ (where $n_2$ is a positive integer). In the linear motor 100 according to the present embodiment, each of the reference numbers relating to the permanent magnets 21 and the columnar yokes 22 is set to two. Therefore, in the linear motor 100 having twice the reference number of slots 13, each of the number of permanent magnets 21 and the number of columnar yokes 22, which are positioned in the yoke 10, is four. The linear motor 100 is thus configured as a four-pole, twelve-slot linear motor in which the number of permanent magnets positioned in the yoke 10 is four and the number of slots 13 formed in the yoke 10 is twelve.

It should be noted that in the linear motor 100, the columnar yokes 22 do not necessarily have to be provided, and alternatively, the permanent magnets 21 may be provided directly adjacent to each other. Even in a case where the linear motor 100 is configured in this manner, the reference number relating to the permanent magnets 21 in the linear motor 100 does not change.

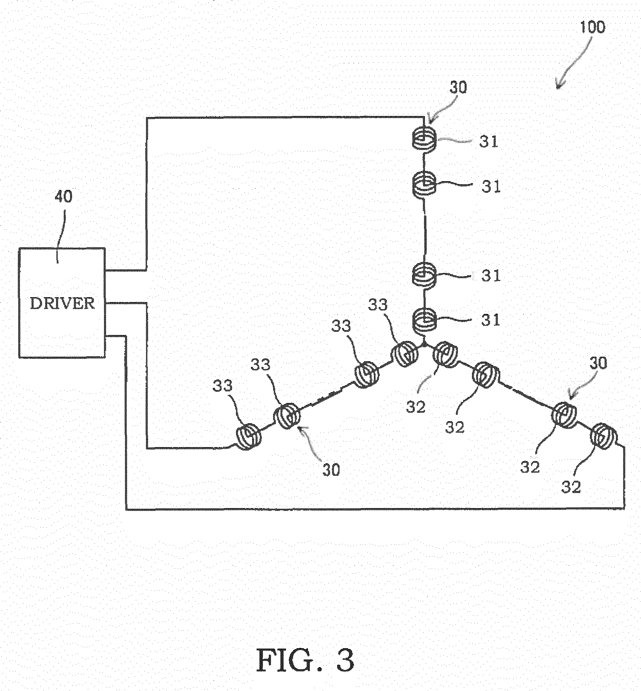

As shown in FIG. 3, in the linear motor 100, the four U-phase coils 31 are connected in series. Similarly, the four V-phase coils 32 and the four W-phase coils 33 are respectively connected in series.

Respective end portions of the U-phase coil 31, the V-phase coil 32, and the W-phase coil 33 disposed on a tip end side are connected to a driver 40, while respective end portions of the U-phase coil 31, the V-phase coil 32, and the W-phase coil 33 disposed on a rear end side are Y-connected. It should be noted that the windings 30A of the first and third U-phase coils 31 from the tip end side and the second and fourth V-phase coils 32 and W-phase coils 33 from the tip end side are wound in one direction around the rod 20, while the windings 30A of the remaining U-phase coils 31, V-phase coils 32, and W-phase coils 33 are wound in another direction (an opposite direction to the one direction) around the rod 20.

The driver 40 is a control device that controls supply of an alternating current to the U-phase coils 31, the V-phase coils 32, and the W-phase coils 33. The driver 40 controls a frequency, an application timing, and so on of the alternating current on the basis of information indicating relative positions of the yoke 10 the rod 20. These relative positions are detected by a position sensor (not shown in the drawings). As a result, a thrust generated by the linear motor 100 and a thrust generation direction are adjusted, and the yoke 10 and the rod 20 are moved relative to each other in a straight line by means of the adjusted thrust.

Now, in the linear motor described in JP2012-244688A, the yoke is configured as a twelve-slot yoke in which six (i.e. the reference number) slots are disposed in succession, and the plurality of teeth formed in the yoke is disposed at equal intervals so that a slot width becomes constant. In this type of linear motor, a variation cycle of a detent force generated in a left side region including the reference number of slots positioned in a left half of the yoke has the same phase as a variation cycle of a detent force generated in a right side region including the reference number of slots positioned in a right half of the yoke. For that reason, the detent forces generated in the two regions reinforce each other, and a sum of the detent forces generated by the linear motor thus increases.

In the linear motor 100 according to the present embodiment, as shown in FIG. 2, the total detent force is reduced by providing a slit 12C (a width adjusting unit) in the tooth 12 positioned on a boundary between a left side region L that includes the reference number of slots 13 positioned in the left half of the yoke and a right side region R that includes the reference number of slots 13 positioned in the right half of the yoke.

The slit 12C is formed in an Nth tooth 12 from a left end or a right end of the yoke 10, the Nth tooth 12 being determined from Equation (1), shown below.

[Numeral 1]

$$N = S \times n_3 + 1 \tag{1}$$

S: a reference number of slots
$n_3$: a positive integer smaller than value obtained by dividing the total number of slots by S

In other words, in the linear motor 100, since the reference number S relating to the slots 13 is six and the total number of slots 13 is twelve, the positive integer $n_3$ that is smaller than a value obtained by dividing the total number of slots by the reference number of slots is 1. Accordingly, $N = 6 \times 1 + 1 = 7$, and the slit 12C is thus formed in the seventh tooth 12 from the yoke end.

The slit 12C is provided in a central position in a width direction of the seventh tooth 12, and formed as an annular groove provided around an axis of the rod 20. By forming the slit 12C in this manner, a width of the seventh tooth 12 from the yoke end increases relative to the width of the other teeth 12 by a width Ws of the slit 12C in the yoke axis direction. In other words, an interval between the adjacent slots 13, 13 sandwiching the seventh tooth 12 is larger than an interval between the adjacent slots 13, 13 sandwiching the other teeth 12.

Further, a depth Ds of the slit 12C in a yoke radius direction is set to be identical to a depth of the slot 13 in the yoke radius direction.

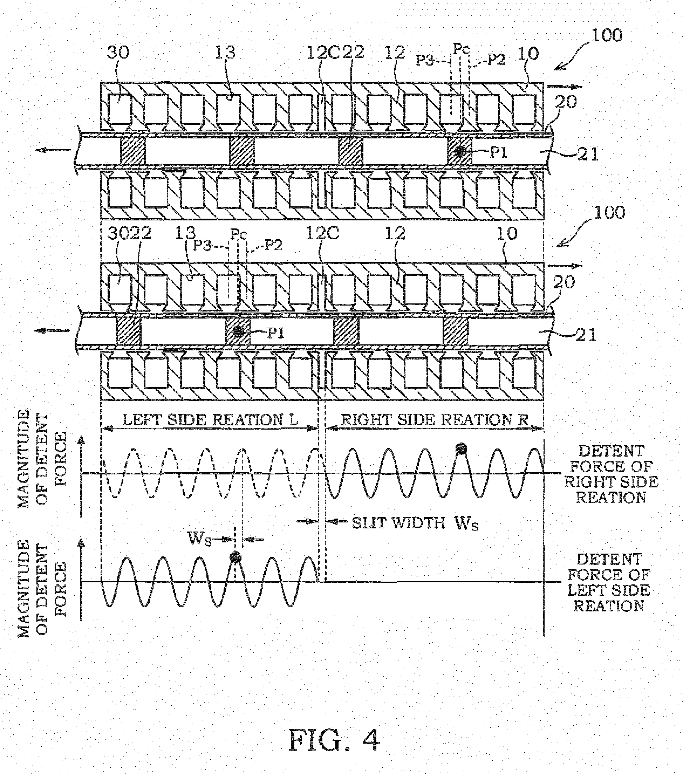

Next, referring to FIG. 4, effects of reducing the detent force generated by the linear motor 100 according to the present embodiment will be described. FIG. 4 is a view showing an example of a case where the rod 20 and the yoke 10 move relative to each other in a leftward direction and a rightward direction, respectively. A lower portion of FIG. 4 is a waveform diagram of the detent force, on which a horizontal axis thereof shows a position of the linear motor 100 in an axial direction and a vertical axis thereof shows a magnitude of the detent force.

As shown in FIG. 4, when the linear motor 100 is driven so that the rod 20 and the yoke 10 move relative to each other, the detent force in the right side region R reaches the maximum at a point where a central position P1 of the columnar yoke 22 aligns with an intermediate position Pc between a central position P2 of the tooth 12 and a central position P3 of the slot 13. Likewise in the left side region L, the detent force reaches the maximum at a point where a central position P1 of the columnar yoke 22 aligns with a intermediate position Pc between a central position P2 of the tooth 12 and a central position P3 of the slot 13.

Supposing no slit 12C is formed in the seventh tooth 12 positioned between the right side region R and the left side region L of the linear motor 100, the phase of the variation cycle of the detent force in the right side region R become the same as the phase of the variation cycle of the detent force in the left side region L. In the linear motor 100, however, the slit 12C is formed so that the tooth width of the seventh tooth 12 from the yoke end is increased. For this reason, the phases of the variation cycles of the respective detent forces in the right side region R and the left side region L can be displaced.

FIG. 4 shows an extension line (a dotted line) illustrating a case where the detent force in the right side region R is extended to the left side region L without changing the variation cycle thereof. As can be seen by comparing the variation cycle of this extension line with the variation cycle of the detent force in the left side region L, in the linear motor 100, a peak position of the detent force in the right side region R is displaced with respect to a peak position of the detent force in the left side region L by the slit width Ws in the yoke axis direction. It is desired that a phase difference between the variation cycles of the detent forces in the respective regions R, L is set to a value within a range of 30° to 60°.

According to the linear motor 100 of the embodiment described above, following effects are achieved.

In the linear motor 100, the slit 12C is formed in the Nth tooth 12 from the yoke end and the Nth tooth 12 is determined from the Equation (1). For this reason, the phases of the variation cycles of the detent forces in the respective regions R, L each including the reference number of slots 13 can be displaced by an amount corresponding to the slit width Ws. Accordingly, the peak positions of the detent forces in the respective regions R, L can be displaced, and this makes it possible to reduce the total detent force generated by the linear motor 100. As a result, the controllability of the linear motor 100 can be improved. In order to displace the peak positions of the detent forces in the respective regions R, L, it is necessary that the depth Ds of the slit 12C in the yoke radius direction is set to be a certain depth. It is preferable that the depth Ds of the slit 12C in the yoke radius direction is set to the same depth as the depth of the slot 13 in the yoke radius direction, for example.

The width of the slit 12C formed in the Nth tooth 12 determined from the Equation (1) is set within a range in which the total detent force generated by the linear motor 100 can be reduced. According to findings by the inventors of the present application, it is desired that the width of the slit 12C in the linear motor 100 is set on the basis of Equation (2), shown below.

[Numeral 2]

$$W_S = W_P / \{(\text{the least common multiple of S and P}) \times 2\} \quad (2)$$

Ws: the width of the slit,
S: the reference number of slots,
P: the reference number of permanent magnets, determined in accordance with the reference number of slots,
Wp: a disposal interval of the reference number (P) of permanent magnets.

In the linear motor 100, the reference number S relating to the slots 13 is six, and the reference number P relating to the permanent magnets 21 is two. As shown in FIG. 2, the disposal interval $W_P$ of the permanent magnets 21 corresponds to a length (a pitch interval) of two permanent magnets 21 and two columnar yokes 22 in the yoke axis direction. In a case where the columnar yokes 22 are disposed in the rod 20 like the linear motor 100, the disposal interval Wp includes a disposal interval of the columnar yokes 22 in addition to a disposal interval of the permanent magnets 21.

By setting the width $W_S$ of the slit 12C in the tooth 12 on the basis of the Equation (2), the phases of the variation cycles of the respective detent forces in the left side region L and the right side region R can be made opposite to each other. As a result, the total detent force generated by the linear motor 100 can be minimized.

As described above, although the embodiment of the present invention have been explained, the above embodiment merely illustrates a part of examples of application of the present invention, and it does not mean that a technical scope of the present invention is limited to a specific configuration of the embodiment described above.

In the linear motor 100 according to the present embodiment, the slit 12C may be filled with a resin such as reinforced plastic. In a case where a non-magnetic material is disposed in the slit 12C of the tooth 12 in this manner, rigidity of the tooth 12 provided with the slit 12C can be increased as well as reducing the total detent force. Therefore, strength of the yoke 10 can be maintained even in a case where the slit 12C is formed.

In the linear motor 100 according to the present embodiment, the yoke 10 may be provided with a divided structure constituted by a right-hand yoke forming the right side region R and a left-hand yoke forming the left side region L, and a spacer (the width adjusting unit) made of a non-magnetic material and having the same width as that of the slit 12C may be interposed between the right-hand yoke and the left-hand yoke. The spacer adjusts the width between a right-hand yoke side tooth and a left-hand yoke side tooth, which are formed at connecting ends of the right-hand yoke and the left-hand yoke.

The linear motor 100 according to the present embodiment has been explained as a four-pole, twelve-slot linear motor in which the reference number relating to the slots 13 is six and the reference number relating to the permanent magnets 21 is two. However, the linear motor 100 may be an eight-pole, twelve-slot linear motor in which the reference number relating to the slots 13 is six and the reference number relating to the permanent magnets 21 is four, a six-pole, eighteen-slot linear motor in which the reference number relating to the slots 13 is six and the reference number relating to the permanent magnets 21 is two, or the like. Hence, the linear motor 100 is configured as a linear motor in which the slots 13 are provided in an integral multiple of the reference number of slots and the permanent magnets 21 are provided in an integral multiple of the reference number of magnets.

In a case where the linear motor 100 is an eight-pole, twelve-slot linear motor as described above, the slit 12C is formed in the seventh tooth 12 from the yoke end on the basis of the Equation (1). Further, in a case where the linear motor 100 is a six-pole, eighteen-slot linear motor, the slit 12 is formed in two teeth 12, that is, the seventh tooth and a thirteenth tooth from the yoke end, on the basis of the Equation (1).

Furthermore, in the linear motor 100 according to the present embodiment, the plurality of permanent magnets 21 is arranged in the axial direction and fixed in the through hole 20A of the rod 20. However, arrangement of the permanent magnets 21 is not limited to this arrangement. For example, the permanent magnets 21 may be formed in a ring shape and fitted externally to an outer periphery of the rod 20, and the plurality of permanent magnets 21 may be arranged in the axial direction so as to oppose the tip ends of the teeth 12.

This application claims priority based on Japanese Patent Application No. 2014-49296, filed with the Japan Patent Office on March 12, 2014, the entire content of which is incorporated into the present specification by reference.

**Claims**

1. A linear motor comprising:

   an annular yoke;
   a rod that penetrates the yoke in a yoke axis direction;
   a plurality of teeth disposed at intervals in the yoke axis direction so as to project from an inner peripheral surface of the yoke;
   slots respectively formed between adjacent teeth of the plurality of teeth;
   a plurality of coils respectively disposed in the slots; and
   permanent magnets arranged and held in the rod in the yoke axis direction,
   wherein the yoke is configured so that the slots are disposed repeatedly by a reference number determined in accordance with the number of phases of an alternating current that is passed through the coils, and
   wherein a width adjusting unit configured to adjust a tooth width is provided in an Nth tooth from a yoke end, the Nth tooth being determined by Equation (1), shown below:

$$N = S \times n + 1 \tag{1}$$

   S: the reference number of slots,
   n: a positive integer smaller than a value obtained by dividing the total number of slots by the slot reference number.

2. The linear motor according to Claim 1,
   wherein the width adjusting unit is a slit formed in the Nth tooth so that a width of the Nth tooth increases relative to a width of each of the other teeth.

3. The linear motor according to Claim 2,
   wherein, in a case where a width of the slit in the yoke axis direction is set to $W_S$, the reference number relating to the slots is set to S, a reference number relating to the permanent magnets, which is determined in accordance with the reference number relating to the slots, is set to P, and an arrangement interval of the reference number of the permanent magnets is set to $W_P$, then the width Ws of the slit is set on the basis of Equation (2), shown below:

$$W_S = W_P \, / \, \{(\text{the least common multiple of S and P}) \times 2\} \quad (2).$$

4. The linear motor according to Claim 2,
   wherein a depth of the slit in a yoke radius direction is set to match a depth of the slot in the yoke radius direction.

5. The linear motor according to Claim 2,
   wherein a non-magnetic material is disposed in the slit.

FIG. 1

FIG. 2

FIG. 3

FIG. 4

## INTERNATIONAL SEARCH REPORT

International application No.

PCT/JP2014/078262

A. CLASSIFICATION OF SUBJECT MATTER
*H02K41/03*(2006.01)i

According to International Patent Classification (IPC) or to both national classification and IPC

B. FIELDS SEARCHED

Minimum documentation searched (classification system followed by classification symbols)
H02K41/03

Documentation searched other than minimum documentation to the extent that such documents are included in the fields searched

| | | |
|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-89260 A  (Hitachi, Ltd.),<br>05 April 2007 (05.04.2007),<br>paragraphs [0011] to [0032]; fig. 1 to 10<br>(Family: none) | 1-2,5<br>3-4 |
| Y | JP 2004-297977 A  (Mitsubishi Electric Corp.),<br>21 October 2004 (21.10.2004),<br>paragraphs [0016] to [0059]; fig. 1 to 13<br>(Family: none) | 3 |
| Y | JP 2012-178955 A  (Mitsubishi Electric Corp.),<br>13 September 2012 (13.09.2012),<br>paragraphs [0014] to [0029]; fig. 1 to 2<br>(Family: none) | 4 |

☒ Further documents are listed in the continuation of Box C.  ☐ See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 January 2015 (06.01.15) | Date of mailing of the international search report<br>20 January 2015 (20.01.15) |
|---|---|
| Name and mailing address of the ISA/<br>Japan Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/078262

C (Continuation).   DOCUMENTS CONSIDERED TO BE RELEVANT

| Category* | Citation of document, with indication, where appropriate, of the relevant passages | Relevant to claim No. |
|---|---|---|
| A | WO 1999/041825 A1 (Yaskawa Electric Corp.), 19 August 1999 (19.08.1999), entire text; all drawings & JP 3852117 B2      & US 6476524 B1 & EP 1056187 A1 | 1-5 |
| A | JP 3-78461 A (NTN Corp.), 03 April 1991 (03.04.1991), entire text; all drawings (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012244688 A

- JP 2014049296 A